# EUROPEAN PATENT SPECIFICATION

(11) **EP 3 918 654 B1**
(45) Date of publication and mention of the grant of the patent: **23.04.2025**
(21) Application number: 20749241.4
(22) Date of filing: 30.01.2020
(51) Int. Cl.: H01M 8/065, H01M 8/04082, H01M 8/04014, H01M 8/0662, H01M 8/04828, H01M 8/04746, H01M 8/083, H01M 8/086, H01M 8/1018, H01M 8/124, C01B 3/06

(54) **HIGH ENERGY DENSITY FUEL CELL APPARATUS AND SYSTEM WITH A HYDRIDE-BASED HYDROGEN GENERATOR AS A SCALABLE POWER SOLUTION CONCEPT**
GERÄT FÜR BRENNSTOFFZELLEN MIT HOHER ENERGIEDICHTE UND SYSTEM MIT WASSERSTOFFGENERATOR AUF HYDRIDBASIS ALS SKALIERBARES ENERGIELÖSUNGSKONZEPT
APPAREIL ET SYSTÈME DE PILE À COMBUSTIBLE À HAUTE DENSITÉ D'ÉNERGIE COMPRENANT UN GÉNÉRATEUR D'HYDROGÈNE À BASE D'HYDRURE EN TANT QUE CONCEPT DE SOLUTION D'ALIMENTATION ÉVOLUTIVE

(30) Priority: 01.02.2019 SG 10201900953U
(43) Date of publication of application: 08.12.2021
(73) Proprietor: HES Energy Systems Pte Ltd, Singapore 139950 (SG)
(72) Inventor: WANKEWYCZ, Taras, Singapore 139950 (SG); KESMEZ, Mehmet, Singapore 139950 (SG); TAN, Liang Yit, Singapore 139950 (SG); ZHANG, Xiaohu, Singapore 139950 (SG)
(74) Representative: Schweiger, Martin
(86) International application number: PCT/SG2020/050042
(87) International publication number: WO 2020/159443

(56) References cited:
- WO-A1-2017/127022
- WO-A1-2019/156627
- CN-A- 109 250 683
- JP-A- 2009 099 534
- KR-B1- 101 342 599
- US-A1- 2008 075 987
- US-A1- 2010 055 517
- US-A1- 2015 118 588
- US-A1- 2016 023 897

## Description

The object of the application is to provide an improved fuel cell apparatus and system with a hydride-based hydrogen generator that is scalable to different power levels, have high energy density, and additional safety features to power various platforms of unmanned vehicles, portable devices, backup or emergency power, soldier power, residential power, etc. Scalability of the stated apparatus and system is stemming from the flexible integration of multiple units both for the fuel cell and hydride-based hydrogen generator. High energy density feature of the overall system is coming from (i) usage of electrochemical methods for generating the electrical energy within the stated power solution, (ii) utilization of a hydrogen-dense hydride material as the hydrogen source in order to power various applications, and (iii) use of a process that that favors the exothermic heat generation during the hydrolysis of the stated hydride material and the subsequent use of this exothermic heat to sustain the hydrolysis reaction. The stated fuel cell and hydride-based hydrogen generator are scalable both at the low-, medium-, and high-level power outputs. In particular, the application relates to a fuel cell based power system that can utilize the hydrogen gas generated from a solid hydride material (via its hydrolysis reaction with water vapor at high temperatures) that can be carried around either by an unmanned vehicle, by a person such as a camper, by an individual soldier, provide power to a group of individuals collectively (such as a group of campers, a squad or multiple squads of soldiers, etc.), or be placed inside the power box for the intended backup or emergency application, etc. Fuel cells are high efficiency devices and coupling such devices with a hydrogen generator system that utilizes a high energy density hydride material for the hydrogen source yield an overall system that combines the synergy of the both systems and reduces the overall system weight drastically compared to conventional battery technology and provides a high energy density power solution for whatever the intended application it is used for.

Currently, all of the essential power needed for various applications (such as various platforms of unmanned vehicles, portable devices, backup or emergency power, soldier power, etc.) is usually obtained by using Li-ion, Li-polymer, or some other relevant battery technology. Since the batteries have to carry the active material for anode and cathode electrodes regardless of the battery chemistry, the operational duration of the intended application is usually extended by carrying more batteries, though the final weight of the battery module becomes extremely heavy. Energy storage capacity of batteries are usually identified based on their specific energy density values and this parameter can be measured either as the energy storage capacity in a unit weight (Watt.Hour/kilogram) or unit volume (Watt.Hour/Liter) basis. As a rule of thumb, the higher the gravimetric energy density or volumetric energy density of the selected battery technology, the longer the application would be powered without recharging or replacing the depleted battery cells. Current state-of-the-art lithium batteries used in various applications have a gravimetric energy density of 120 to 180 Wh/kg values. Portable power applications (such as consumer electronics products, soldier power, camping and other recreational activity, etc.) for 1-person team to a few-person team would usually require a power output that is in the range of 0 to 100 Watts. As the size the team in terms of members grows (10-20 member camping group, a squad of soldiers with 8 to 24 soldiers, a platoon of soldiers with 16 to 50 members, etc.), the power consumption value can easily increase to multi-kilowatts. Various small to medium class of unmanned vehicles (fixed-wing UAVs, multi-rotor drones, VTOLs, etc.) usually utilize power in the range of 100 Watts to multi-kilowatts such as 10 kW and this power consumption is completely dependent on the maximum takeoff weight (MTOW) and architecture of the unmanned vehicle. Heavy-lift unmanned vehicles can consume power in the order of 10 kW to 100 kW. The electrical energy requirement of emergency/backup applications such as telecoms (critical communication network infrastructures in wireless, fixed, and broadband) can range from 250 W to 15 kW. Certain residential and stationary applications may require an electrical power of 25 kW to 1 MW. Even though conventional battery technologies can be used either as single module or in an array of modules in order to cover a large range of power production with high electrical efficiency for various applications, their low gravimetric energy density values (120 to 180 Wh/kg), high replacement costs, unpredictable life expectancy in harsh environments, and toxic disposal challenges have limited their usage. In layman's term, the definition of low-, medium-, and high-level power outputs can roughly be defined as 0-100 Watts, 0-100kW, and 0-1MW and the scope of this application is by no means limited to these definitions.

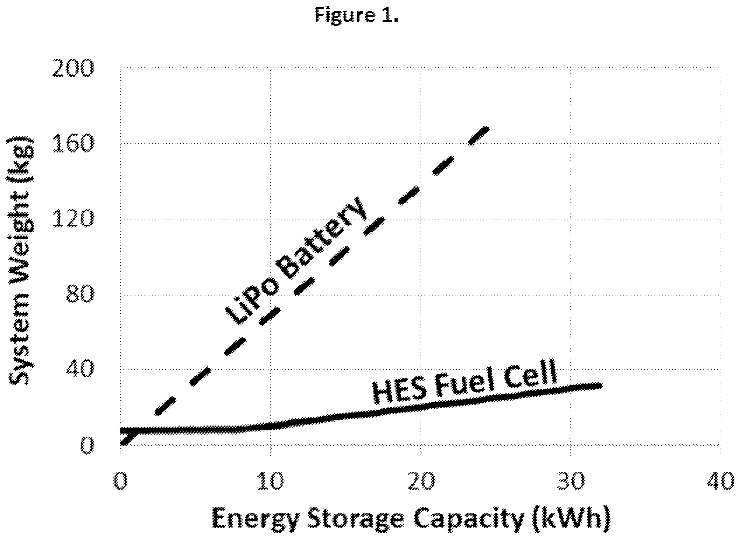

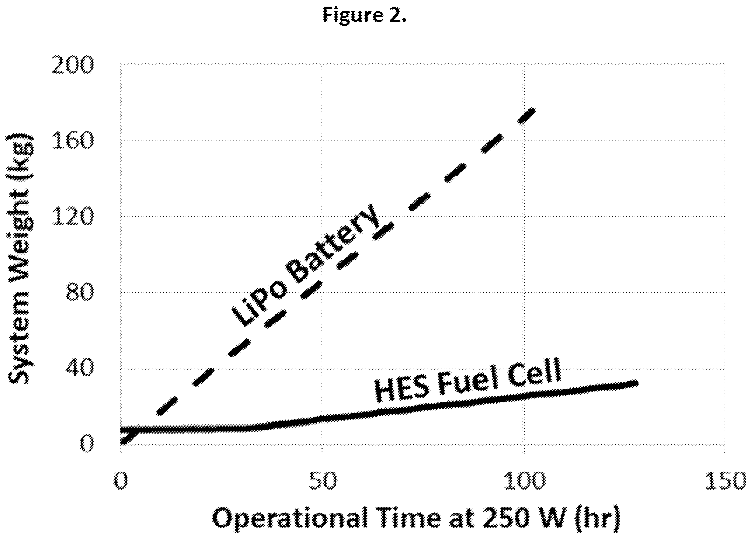

A fuel cell is an excellent portable power source of electricity because of its high energy density compared to conventional batteries. To increase the operational time of a battery-powered application, the battery capacity needs to be increased. The following section provides a comparison of fuel cell system to a lithium-polymer system for their weight, energy storage capacity, and operational time for a certain assumed power scenario. Assuming that a particular application is consuming 250 Watts (for example 22.2 V at 11.26 A) of electrical energy, a 7700 mAh lithium-polymer battery module would weigh 1.17 kg, store 170 Wh of electrical energy, have 146 Wh/kg gravimetric energy density, and would last 0.68 hours (see http://www.thunderpowerrc.com/AIR_BATTERIES/7700-mAhE/TP7700-6SE55). Increasing the battery system weight to 30 kg (by stacking up a large number of 7700 mAh modules), the operational time can be increased to 17.43 hours. Since the energy storage capacity of batteries is directly related to the quantities of the anode/cathode active material, the weight increase for batteries is almost linear. Fuel cells, contrary to the conventional batteries, do not have to carry the active material and it only needs a single fuel cell stack module to continuously generate power. To extend the operational time for the fuel cells, only the cylinder storage needs to be increased and adjusting the size of the cylinder and the overall system weight increase is minimal compared to the weight increase seen in a battery technology. Figure 1 shows the comparison of HES' PEM fuel cell system and a commercial LiPo battery module in terms of their overall system weight as a function of energy storage capacity. Figure 2 shows the comparison of HES' PEM fuel cell system and a commercial LiPo battery module in terms of their overall system weight as a function of operational time assuming that the electrical energy consumption value is set at 250 Watts. For a 30 kg weighing fuel cell system, the energy storage capacity can be around 30 kWh and an operational time can be increased to 120 hours. To sum up, fuel cell system roughly provides a 6-fold increase in the operational time compared to LiPo battery system.

| | **HES Fuel Cell System** | **LiPo Battery System** |
|---|---|---|
| **Overall system weight** | 30 kg | 30 kg |
| **Energy Storage Capacity** | 30.04 kWh | 4.35 kWh |
| **Operational time at 250 W power consumption** | 120.17 hours | 17.43 hours |
| **Gravimetric Energy Density** | 1001 Wh/kg | 145 Wh/kg |

| | | |
|---|---|---|
| ** These calculations considered the actual fuel cell system specifications that were manufactured by HES Energy Systems. The weight of a 250-Watt fuel cell system is 730 grams and the weight of a 20 Liter composite cylinder is 7000 grams. At 350 bars of compression, the composite cylinder stores 629 grams of hydrogen and HES' fuel cell system produces an energy of 7840 Wh with this amount of stored hydrogen at the nominal operating conditions. In order to achieve 30 kWh energy storage capacity, a single fuel cell stack and a total of 4 composite cylinder array was considered for the above-mentioned calculations.* | | |

As it can be seen in the above-mentioned table, fuel cell systems can achieve very high gravimetric energy density values (such as 1001 Wh/kg for the above-mentioned case study, which is greater than 600% compared to LiPo battery's gravimetric energy density) and potentially provide significant improvements for the operational time or yield a much lighter system weight than the conventional battery based systems.

These fuel cells may be direct methanol fuel cell (DMFC), alkaline fuel cells, solid oxide fuel cell (SOFC) or proton exchange membrane fuel cell (PEMFC). Among these different fuel cell technologies, PEMFC is the most promising fuel cell technology because of its excellent electrochemical performance within the temperature envelope of -20 to 80 °C and high-power density for the fuel cell stack component (up to 5.5 W/cm2). With the use of ultralight-weight fuel cell stacks, such as HES' Aerostak products (https://www.hes.sg/aerostak), gravimetric energy density values greater than 1000 Wh/kg can easily be achieved at the overall system level depending on the form of the hydrogen (meaning how the hydrogen is stored). Multiple fuel cell systems can be integrated in series or parallel (form an electrical connectivity perspective) in order to generate the desired amount of electrical energy. For example, if a single fuel cell system is capable of generating 1.5 kW of electrical power, then integration of multiples of this same system would create multiples of 1.5 kW of electrical power, such as 10 units of 1.5 kW fuel cell system connected in series would produce a total of 15 kW of electrical power. Hence, an array of PEM fuel cell systems make this electrochemical technology very scalable for larger power output requiring applications.

PEMFCs utilizes hydrogen gas at the anode side and oxygen (from the ambient air) at the cathode side electrochemically, which creates an electrical voltage that can be used to generate electrical energy. Though, a major limitation for the use of PEMFCs has been the need for high-density hydrogen storage. Hydrogen can be initially generated as gas or liquid and then stored inside a properly designed cylinder at an off-site location or the hydrogen can be generated in the field in real time by using a solid hydrogen storing material such as hydrides. Currently available high-pressure cylinders are bulky in volume, heavy, and can store limited quantities of hydrogen gas due to their low working pressure. Most of the portable cylinders have volumetric capacity of several liters, weighs several kilograms, and have a working pressure of up to 700 bars. Despite the fact that liquid hydrogen storage option has a much higher energy storage capacity compared to gaseous high-pressure hydrogen storage option, large volume and mass for the storage vessel and boil-off issues prevented its widespread use for various applications. On the other hand, on-demand and real-time generation of hydrogen from solid materials such as hydride compounds have a large potential from an engineering feasibility for numerous applications (such as portable applications, various unmanned vehicles, emergency/backup power, etc.) due to easy extraction of the hydrogen approaches from the hydride material itself.

There exist a number of hydride materials that can be used for hydrogen gas generation such as sodium borohydride, ammonia borane, alanates, magnesium hydride, etc. Hydrolysis and thermolysis are the most common methods of extracting hydrogen from such hydride materials. Hydrolysis approach refers to the chemical reaction of hydride material with water (whether this is pure water, caustic water, or acidic water) with or without a catalysts bed. Thermolysis method refers to extraction of hydrogen from the hydride material with heat without using any other ingredients. Hydrogen gas generated with the thermolysis route usually requires the thermal decomposition of a known quantity of the hydride material (most of the time in the pelletized form) instantly and hence there is a need for a high-pressure vessel to contain the generated hydrogen gas. The weight of the high-pressure vessel usually is very high in order to provide a reasonable safety margin for its safe operation and hence not suitable for majority of portable power applications, unmanned vehicles (particularly unmanned aerial vehicles), etc. In short, hydrolysis method has been identified as a more promising approach for hydrogen generation from hydride materials due to its engineering feasibility and lightweight nature of the final hardware.

CN 109 250 683 A describes an apparatus comprising a fuel cell, a hydrogen production device using magnesium hydride as a hydrogen storage material, a water tank, a water pump, and a steam dispensing microporous medium.

Kim and Lee, published an article "A complete power source of micro PEM cell with NaBH4 microreactor", in Micro Electro Mechanical Systems, 2011 IEEE 24th International Conference. This micro PEM cell includes a micro reactor for hydrogen generation from NaBH4 alkaline solution. This technology uses highly caustic and hazardous chemicals such as sodium hydroxide or potassium hydroxide in order to stabilize the lifetime of the sodium borohydride material. Furthermore, the by-product of the sodium borohydride hydrolysis reaction is highly viscous and needs to be flashed out of the catalyst bed by using water, which creates additional logistics requirements for the intended applications. There is a need for a better hydride material that does not require use of hazardous chemicals or create additional logistics issues.

While ammonia borane has a higher hydrogen storage percentage compared to sodium borohydride, during the hydrolysis of the ammonia borane, ammonia gas is also generated, and the hydrogen stream needs to be cleaned from this ammonia gas contaminant (since this is a poisoning chemical for PEMFCs) before the generated hydrogen enters the fuel cell stack. This gas cleanup adds more complexity to the portable power device, increases its weight and volume, and hence makes it difficult to use for a wide range of power applications.

A hydride material that is based on magnesium can also be used for the hydrogen gas generation via the hydrolysis route. Hydrolysis reaction of MgH2 can either be classified as exothermic or endothermic. Depending on the amount of water used, the hydrolysis reaction mechanism changes drastically for the magnesium hydride powder (see Eqs. 1 and 2). Furthermore, the state of the water (liquid or steam) also affects the outcome of the hydrolysis reaction. Some of the most important hydrolysis reactions of MgH2 with water (regardless of the state of the water) can be given as:

MgH2 + H2O → MgO + 2H2 (Delta H: -360 kJ/mol) Eq.1

MgH2 + 2H2O → Mg(OH)2 + 2H2 (Delta H: -138.5 kJ/mol) Eq.2

Hydrolysis reaction of MgH2 with steam is highly exothermic when the molar ratio of MgH2 to water is kept at 1, meaning MgH2's number of moles is equal to steam's number of moles (see Eq. 1, hereinafter it is called exothermic MgH2 hydrolysis reaction). As the number of moles is increased for the water (see Eq. 2), the heat production becomes less (in layman's term, it is becoming more endothermic). Despite the fact that the Eq. 2 is theoretically considered to be exothermic in nature, but the amount of heat generated is not sufficient to sustain the hydrolysis of MgH2 when too much water is consumed, and it requires the use of an external power source to input an additional amount of heat in order to complete the hydrolysis reaction. To sum up, as it can be seen in Eq. 1 and Eq. 2, the amount of water used for the hydrolysis reaction drastically affects the quantity of the heat produced. Once the hydrolysis reaction is initiated with an initial heating, it will be advantageous to utilize this exothermic heat to its fullest in order to sustain the hydrolysis reaction without adding any additional external heat from an external power source such as a battery. For this reason, exothermic hydrolysis reaction pathway that is provided in Eq. 1 is the preferred pathway for this application to generate a significant amount of exothermic heat and then use this exothermic heat to sustain the hydrolysis reaction after the initial pre-heating step without any additional heat from an external power source.

This application utilizes the exothermic MgH2 hydrolysis reaction pathway by limiting the water usage to the desired stoichiometry range, which can be summarized as molar ratio of MgH2 to H2O being the range of 1-2, preferably in the range of 1 to 1.5, more preferably in the range of 1 to 1.25, even more preferably in the range of 1 to 1.1.

The following presents a summary to provide a basic understanding of the present application. This summary is by no means an extensive overview of the application and is not intended to identify key features of the application. Rather, it is to present some of the novel concepts of this application in a generalized form as a prelude to the detailed description that is to follow.

The present application is comprised of a fuel cell apparatus and system and a hydride-based hydrogen generator system with improved scalability in terms of power output and hydrogen gas generation. The proposed fuel cell system has high electrical efficiency and good scalability to assist a large number of applications. Hydride-based hydrogen generator utilizes a hydride material that has excellent stability across a wide temperature range, has a high hydrogen storage percentage capacity, excellent hydrogen extraction via high temperature steam hydrolysis route, and excellent scalability for producing any quantity of hydrogen flow rate depending on the reactor design used to generate the hydrogen. The synergy between these two systems ultimately yields an overall powering device that can be used for a wide range of applications without compromising the scalability or efficiency.

The fuel cell apparatus and system is comprised of a fuel cell, a balance of plant, and a fuel cell controller. The heart of a fuel cell is the fuel cell stack where the membrane electrode assemblies are grouped together either in series or in parallel. Membrane electrode assembly is comprised of an anode catalyst, a membrane, a cathode catalyst and the corresponding gas diffusion layers and gaskets. Hydrogen and oxygen reactants get consumed electrochemically at the anode and cathode catalysts, respectively. The stated electrochemical reaction produces an electrical voltage and hence power. The power range for the stated fuel cell apparatus and system is highly scalable and it is a function of the number of cells present in the fuel cell stack. This application intends to cover the following range of power: 0 Watts to 1 MW. While a single fuel cell system is capable of providing either 0 to 10 Watts, 0 to 20 Watts, 0 to 50 Watts, 0 to 100 Watts, 0 to 250 Watts, 0 to 500 Watts, 0 to 1000 Watts, 0 to 1500 Watts, 0 to 2000 Watts, 0 to 3000 Watts, 0 to 5000 Watts, 0 to 10000 Watts, 0 to 50000 Watts, 0 to 250000 Watts depending on the fuel cell stack technology (air cooled or liquid cooled), an array of multiple of a same fuel cell stacks that are connected either in parallel or in series can easily produce an electrical power output of 1 MW with the proper engineering. The nominal operation of "open cathode fuel cell stacks (also known as air-cooled fuel cell stacks)" require their usage at electrical efficiencies greater than 50% in order to increase their operational lifetimes. The balance of plant components is comprised of the following items: fuel cell casing, fuel cell stack manifold, fan, pressure regulator, pressure sensor, temperature sensor, supply valve, purge valves, gas stream cleaning filters, LCD display, hydrogen gas transfer plumbing, unused hydrogen and water purging plumbing, fuel cell stack conditioning electronics, and etc. (but not limited to those). The stated balance of plant components can be used as single or plural items in order to facilitate the safe operation of the fuel cell system to reliably produce the desired electrical power by consuming the hydrogen gas coming from the hydrogen generation system. The stated fuel cell system can be assembled as a single unit (meaning as a stand-alone unit) for ease of integration to a stand-alone hydrogen generation unit or it can be intimately assembled with the hydrogen generation unit in a more compact and ruggedized form factor.

The hydride-based hydrogen generation system is comprised of a water storage vessel, a hydride cartridge, and a balance of plant in order to generate sufficient quantity of hydrogen for the fuel cell apparatus and system stated in this application. The preferred hydride material is magnesium hydride, and the preferred hydrolysis reaction pathway is the exothermic MgH2 hydrolysis reaction (see Eq.1). The main functionality of the water storage vessel is to store the water supply in a storage area and transfer this water to the reaction chamber with the aid of a pump. The water storage vessel assembly can also be comprised of the following components: water tank, water pump, orientation-independent water movement mechanism, pressure sensor, temperature sensor, valves (with different functionalities), filters, buffer or condenser unit, a battery, essential plumbing to move the water into the hydride reactor and collect the hydrogen from the hydride reactor, and etc. A hydride cartridge is comprised of a reactor vessel, a vessel cap, a mounting plate to secure the input and output plumbing and connectors, a heater, and a number of porous and non-porous tubes located inside the reactor vessel with different functionalities. The reactor vessel has the main functionalities of containing the magnesium hydride fuel and all of the essential other reactor components needed to allow the water vapor or steam entering into the hydride reactor, allowing the hydrolysis reaction be carried very efficiently while utilizing the exothermic heat generated (from the exothermic MgH2 hydrolysis reaction) in order to sustain the hydrolysis reaction without inputting an extra amount of electrical energy from the small battery module or from any other external power source, and collect the generated hydrogen and remove the contaminants from the hydrogen stream. The cooling down of the hydrogen gas temperature to a level that is appropriate to the safe operation of the stated fuel cell apparatus and system, and transferring of this clean and cooled down hydrogen to the fuel cell is done with the cooling coil and other essential plumbing that reside between the hydride cartridge and the fuel cell. Depending on the desired operational time and also desired power output, the reactor portion of the hydride-based hydrogen generator can be designed to contain sufficient amounts of hydride material that would suffice to generate an electrical energy of 0 to 10 Wh, 0 to 30 Wh, 0 to 50 Wh, 0 to 100 Wh, 0 to 300 Wh, 0 to 500 Wh, 0 to 1000 Wh, 0 to 3000 Wh, 0 to 5000 Wh, 0 to 10000 Wh, 0 to 30000 Wh, 0 to 50000 Wh, 0 to 100000 Wh, 0 to 300000 Wh, and 0 to 1000000 Wh. An array of the same or different hydrogen generation system can be integrated with each other in order to produce the desired quantity of hydrogen gas flow that is needed for the intended application. The stated hydride-based hydrogen generator system can be assembled as a single unit (meaning as a stand-alone unit) for ease of integration to a fuel cell apparatus and system or it can be intimately assembled with the fuel cell apparatus and system in a more compact and ruggedized form factor.
Figure 1 provides a comparison of HES' high energy density fuel cell apparatus and system to a commercial lithium-polymer battery system in terms of system weight as a function of energy storage capacity;
Figure 2 provides a comparison of HES' high energy density fuel cell apparatus and system to a commercial lithium-polymer battery system in terms of system weight as a function of operational time (for a case study of 250 Watts of continuous power consumption);
Figure 3 describes the major constituents (in the form of the system schematic) of a high energy density fuel cell apparatus and system with a hydride-based hydrogen generator and its overall fluidic/electrical/communication interfacing for the present application;
Figure 4 shows the pictures of high energy density fuel cell apparatus and systems that are designed and manufactured by HES Energy Systems and their scalability for the power output parameter;
Figure 5 illustrates the design schematics of hydride-based hydrogen generators with different energy storage capacity features that were designed, manufactured, and tested within the scope of this application: 0 to 300 Wh (left image), 0 to 1000 Wh (center image), and 0 to 3000 Wh (right image);
Figure 6 shows the schematic of the 0 to 300 Wh capacity reactor vessel for the hydride-based hydrogen generator system;
Figure 7 shows the pictures of the hydride cartridges that is located inside the stated hydride-based hydrogen generators with different energy storage capacity features that were designed, manufactured, and tested within the scope of this application: 0 to 300 Wh (left image), 0 to 1000 Wh (center image), and 0 to 3000 Wh (right image) and also the relevant applications for these;
Figure 8 shows the electrochemical performance of a high energy density fuel cell apparatus and system integrated with a hydride-based hydrogen generator; fuel cell was designed to provide power for portable applications carried by a single camper or a soldier, or for consumer electronics devices, etc. (0-35 Watts); and the hydride cartridge encased inside the hydride-based hydrogen generator was designed to provide an energy storage capacity of 0 to 300 Wh;
Figure 9 shows the electrochemical performance of a high energy density fuel cell apparatus and system integrated with a hydride-based hydrogen generator; fuel cell was designed to provide power for multiple team member involving activities for camping, electronics and gears carried by a section or a squad of soldiers, fixed-wing aircraft, etc. (0 to 400 Watts); and the hydride cartridge encased inside the hydride-based hydrogen generator was designed to provide an energy storage capacity of 0 to 1000 Wh;
Figure 10 shows the electrochemical performance of a high energy density fuel cell apparatus and system integrated with a hydride-based hydrogen generator; fuel cell was designed to provide power for multiple team member involving activities for camping, electronics and gears carried by multiples of sections or squads of soldiers, multi-rotor drones, VTOLs, etc. (0 to 1800 Watts); and the hydride cartridge encased inside the hydride-based hydrogen generator was designed to provide an energy storage capacity of 0 to 3000 Wh;
Figure 11 describes an array of the 0 to 3000 Wh capacity hydride cartridges connected to a common manifold and the collected hydrogen gas is sent to the fuel cell in order to generate an electrical power of multi-kilowatts to 1 MW;
Figure 12 illustrates the basic schematic of a reactor vessel with single hydrolysis reaction zone for the hydride-based hydrogen generator system to generate hydrogen from the magnesium hydride powder;
Figure 13 illustrates the basic schematic of a reactor vessel with multiple hydrolysis reaction zones (segmented and separated from the neighboring reaction zone with a physical separator) for the hydride-based hydrogen generator system in order to increase the H2 generation flow rate within the same vessel via injecting steam at multiple locations of the porous tubes used to dispense the steam into the MgH2 powder;
In the following description, details are provided to describe embodiments of the application. It shall be apparent to one skilled in the art, however, that the embodiments may be practiced without such details.
Some parts of the embodiment have similar parts. The similar parts may have the same names or similar part numbers. The description of one similar part also applies by reference to another similar parts, where appropriate, thereby reducing repetition of text without limiting the disclosure.

Figure 1 shows the comparison of a high energy density fuel cell apparatus and system (designed and manufactured the applicant) to a commercial lithium-polymer battery system in terms of system weight as a function of the energy storage capacity. Since a battery system has to carry the active material for anode and cathode electrodes and extension of the operational time for any application would require the use of more battery cells, the overall system weight increases drastically. On the other hand, a fuel cell apparatus and system would require a single fuel cell hardware to continuously convert the chemical energy of the hydrogen to electrical power and extending the operational time is achieved by increasing the size of the hydrogen cylinder or increasing the weight of the hydride material. For this particular case, gaseous hydrogen stored inside composite cylinder was considered. Assuming that a particular application is consuming 250 Watts (for example 22.2 V at 11.26 A) of electrical energy, a 7700 mAh lithium-polymer battery module would weigh 1.17 kg, store 170 Wh of electrical energy, and have 146 Wh/kg gravimetric energy density. Increasing the battery system weight to 30 kg (by stacking up a large number of 7700 mAh modules), the energy storage capacity can only be increased to 4.35 kWh. On the other hand, for a 30 kg weighing high energy density fuel cell apparatus and system, the energy storage capacity can be around 30 kWh (hydrogen fuel is stored in a cylinder in the gaseous form). To sum up, fuel cell apparatus and system that is running on gaseous hydrogen fuel roughly provides a 6-fold increase in the energy storage capacity for the same weight value compared to a commercially manufactured LiPo battery system that is made of multiples of smaller battery cells.

Figure 2 shows the comparison of a high energy density fuel cell apparatus and system (designed and manufactured the applicant) to a commercial lithium-polymer battery system in terms of system weight as a function of the operational time. Since a battery system has to carry the active material for anode and cathode electrodes and extension of the operational time for any application would require the use of more battery cells, the overall system weight increases drastically. On the other hand, a fuel cell system would require a single fuel cell hardware to continuously convert the chemical energy of the hydrogen to electrical power and extending the operational time is achieved by increasing the size of the hydrogen cylinder or quantity of the hydride material. Assuming that a particular application is consuming 250 Watts (for example 22.2 V at 11.26 A) of electrical energy, the 30 kg weighing battery system (by stacking up a large number of 7700 mAh modules) would have an energy storage capacity of 4.35 kWh and provide an operational time of around 17.43 hours. On the other hand, for a 30 kg weighing high energy density fuel cell apparatus and system, the energy storage capacity can be around 30 kWh (hydrogen fuel is stored in a cylinder in the gaseous form) and an operational time can be increased to 120 hours assuming that the particular application is consuming 250 Watts. To sum up, high energy density fuel cell apparatus and system roughly provides a 6-fold increase in the operational time compared to a commercial lithium-polymer battery system.

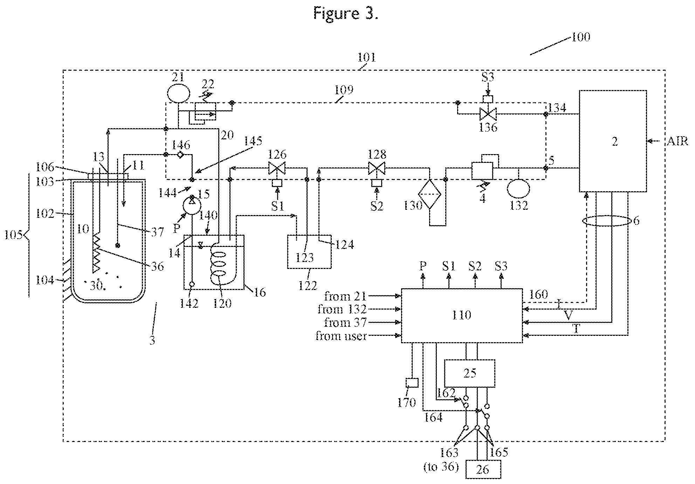

Figure 3 shows a schematic of a high energy density fuel cell apparatus and system with hydride-based hydrogen generator 100 according to an embodiment of the present application. The entire high energy density fuel cell apparatus and system with hydride-based hydrogen generator 100 is enclosed in a housing 101. Whilst, the high energy density fuel cell apparatus and system with hydride-based hydrogen generator 100 can be designed to be portable and be carried by a user, it can also be designed to be not portable depending on the application it is used for. The following describes a high energy density fuel cell apparatus and system with hydride-based hydrogen generator 100, which provides a safe, useful and power system that can be used to power various portable or non-portable applications. As seen from Figure 3, the high energy density fuel cell apparatus and system with hydride-based hydrogen generator 100 includes at least a fuel cell 2 and a hydride-based hydrogen generator 3; the hydride-based hydrogen generator 3 includes a reactor vessel 102, an accompanying vessel cap 103, and a water storage vessel 16. The vessel cap 103 closes the reactor vessel 102 to provide a leak-proof reaction chamber 10; in one embodiment, the vessel cap 103 is connected to the reactor vessel 102 by welding. In use, a hydride powder 30 is disposed inside the reaction chamber 10, which is hydrolyzed with steam to produce hydrogen gas. The reactor vessel 102 is a double-walled vessel, with the space between the walls being evacuated to a vacuum. The hydrogen reactor vessel 102 can also be constructed from a single-walled vessel with or without a heat insulator 104. If desired, the exterior surfaces of the reactor vessel 102 and vessel cap 103 are covered by a heat insulator 104, with part of the heat insulator 104 being shown in Figure 3. With double-walled vacuum around the reactor vessel 102, a thickness required of the heat insulator 104 is significantly reduced; the reduced bulk of the heat insulator 104 means reduction in the external dimensions of the heat insulator. A reduction in weight/volume for the heat insulator 104 would mean that the weight/volume of the high energy density fuel cell apparatus and system with a hydride-based hydrogen generator 100 would also be lowered. To allow quick replacement of the reactor vessel 102 and vessel cap 103 assembly, a water supply tubing, hydrogen outlet, heater, etc. that enter the reactor vessel 102 are supported on a mounting plate 106. In addition, the water supply tubing may be connected at the mounting plate 106 via a quick-disconnect coupling 11; similarly, the hydrogen outlet may be connected at the mounting plate 106 via another quick-disconnect coupling 13. Hydrogen gas produced in the reactor vessel 102 is finally supplied to the fuel cell 2 through a pressure regulator 4 and a hydrogen outlet 5. A gas outlet from the fuel cell 2 is connected to an exhaust port 134 located on a manifold 109; the exhaust port 134 is fluidly connected to a purge valve 136, which is operable to vent out gas from the fuel cell 2; in use, the purge valve 136 is controlled by a signal from a controller 110 via a solenoid S3 on the purge valve 136. The purge valve 136 and all the fluid flow components that are described for connecting into the manifold 109 are of a cartridge type; this is to achieve a more compact configuration if the high energy density fuel cell apparatus and system with a hydride-based hydrogen generator 100 is designed to be for portable power applications. Other types of fluid flow components can also be used within the high energy density fuel cell apparatus and system with a hydride-based hydrogen generator 100 if there are no constraints placed on the weight and volume.

Again referring to Figure 3, water is stored in the water storage vessel 16. Water is supplied into the reaction chamber 10 via a water outlet port 14 located on the water storage vessel 16, a pump 15, a tubing 144 connecting a discharge port from the pump 15 to a check valve 146 and another tubing joined to the coupling 11 before terminating inside the reaction chamber 10. Preferably, the check valve 146 is located inside the manifold 109. In one embodiment, the tubing 144 is selected to provide a predetermined rupture pressure range, so that during an emergency state of operation, for eg. inside the reaction chamber 10 or caused by an exterior environment outside of the high energy density fuel cell apparatus and system with a hydride-based hydrogen generator 100, the tubing 144 is operable to rupture and stop the supply of water into the reaction chamber 10; when this happens, the check valve 146 ensures that the reaction chamber 10 remains closed to prevent the oxygen in the ambient mixing with the hydrogen gas inside the reaction chamber 10 and eliminate the risk of an explosion. The tubing 144 and the check valve 146 provide a non-recoverable fail-safe mechanism for this high energy density fuel cell apparatus and system with a hydride-based hydrogen generator 100.

Hydrogen produced in the reaction chamber 10 is supplied through a hydrogen outlet port or quick-disconnect coupling 13 located on the mounting plate 106 and flows into a hydrogen line 20; preferably, the hydrogen line 20 is located inside the manifold 109; thereafter inside the manifold 109, the hydrogen line 20 is tapped off to a pressure sensor 21 and a pressure relief valve 22. The hydrogen line 20 then goes into a cooling coil 120, which is disposed inside the water storage vessel 16, with an outlet of the cooling coil leading to a buffer tank 122. The hydrogen gas passes through the cooling coil 120 and is being cooled from a high temperature of about 100 to 600 °C (in the reaction chamber 10) to about 20-60 °C; any water that condenses out from the hydrogen gas is collected inside the buffer tank 122; the condensed water is recycled into the water storage vessel 16 via a recollection valve 126, which is operable by a signal from the controller 110 to a solenoid S1. Hydrogen flowing through an outlet 124 at the buffer tank 122 is connected to a purifying filter 130 before the pressure is controlled by the pressure regulator 4. The hydrogen supply upstream of the purifying filter 130 is controlled by a supply valve 128 and an accompanying solenoid S2. The supply valve 128 may be used to stop the hydrogen gas being supplied to the fuel cell 2 when the fuel cell 2 is being purged, for eg. at an end of a power generation cycle or at an end of a start-stop cycle, as determined by the controller 110 and/or user. The controller 110 is electrically connected to the fuel cell 2 by a cable 6.

The water storage vessel 16 is spill-proof. As seen from Figure 3, the water storage vessel 16 is a fully enclosed vessel with an appropriately sized volume desired by the intended application (such as 120 mL of water for a 300 Wh capacity magnesium hydride cartridge that can be used to power a camper's electronics), has a removeable membrane 140 made from a porous PTFE; the porous PTFE membrane 140 allows gas to pass through but is impermeable to water; any hydrogen gas that is recycled back through the water recollection line, ie via port 123, may escape through the porous PTFE membrane 140; in this manner, pressure in the water storage vessel 16 is maintained at atmospheric pressure. The water storage vessel 16 being spill-proof and maintained at atmospheric pressure is a second safety feature built into the high energy density fuel cell apparatus and system with a hydride-based hydrogen generator 100. In addition, a weighted clunk 142 is disposed at a free end of a water intake tube that leads to a suction port of the pump 15. The weighted clunk 142 ensures that the free end of the water intake tube is fully submerged under water irrespective of orientation of the housing 101 that encases the high energy density fuel cell apparatus and system with a hydride-based hydrogen generator 100.

The preferred hydride powder for this application is comprised of magnesium hydride (MgH₂) material. To hydrolyse MgH₂ powder 30 that is disposed inside the reactor vessel 102 (via exothermic MgH2 hydrolysis reaction, see Eq.1), the reaction chamber 10 is preferably pre-heated to about 80-100 °C. The initial heating of the reaction chamber 10 is carried out by the controller 110 providing a signal to close a switch 162 connected to a heater port 163, which is electrically connected to the heater 36. It is essential that the heater 36 provides enough residential time to the water for its heating and conversion into steam and this can be achieved by manufacturing the heater 36 in spiral coil form. Initial power for the heater 36 is obtained from a battery 25 or another external power source. Once sufficient hydrogen is generated from the reaction chamber 10 and operation of the high energy density fuel cell apparatus and system with a hydride-based hydrogen generator 100 is sustainable, electric power generated from the fuel cell 2 is fed through the cable 6 to the controller 110. Hydrolysis of the MgH₂ is controlled either by consumption of hydrogen gas at the fuel cell 2 (via monitoring of the hydrogen gas pressure inside the fuel cell 2 by reading the pressure value sensed by the pressure sensor 132) or by controlling the amount of water fed through the pump 15 according to a demand of an electric load 26 connected to an output port 165. In one embodiment, when the voltage V in the cable 6 exceeds that of the battery 25, a portion of or all of the electric power from the fuel cell 2 charges up the battery 25. In this application, it is intended to use the exothermic MgH2 hydrolysis reaction pathway and hence a temperature sensor 37, such as a thermocouple, monitors the temperature inside the reaction chamber 10. Signal from the temperature sensor 37 is fed to the controller 110, together with signals from the hydrogen pressure sensors 21 or 132. As seen from Figure 3, the pressure sensor 21 is located near the reaction chamber 10 while the pressure sensor 132 is located near the fuel cell 2. Also seen from Figure 3, a user may provide a start-stop signal to the controller 110. It is possible that the cable 6 includes one or more signals from the controller 110 to control operation of the fuel cell 2; for eg, a signal to the fuel cell 2 may control a ventilation fan disposed in the fuel cell 2 to ensure a constant supply of O₂/air and to dissipate excess H₂ within the fuel cell 2 that might be leaking to overboard.

The high energy density fuel cell apparatus and supply with a hydride-based hydrogen generator 100 assembly includes the following (but not limited to and some of the components are not shown in the figures for the sake of simplicity):
i. the fuel cell 2; is the primary power source for the high energy density fuel cell apparatus and supply with a hydride-based hydrogen generator 100 that produces electrical energy through the electrochemical reaction of oxygen at the cathode side of the fuel cell stack and hydrogen at the anode, where hydrogen is oxidized to protons at the anode electrocatalysts layer, protons are then transferred to the cathode through the ionically conductive membrane and electrons sent to cathode via the external electrical connection, and at cathode proton ions react with oxygen molecule and electrons in order to create electrical energy and water as the by-product;
ii. the battery 25; serves as a secondary power source for the high energy density fuel cell apparatus and supply with a hydride-based hydrogen generator 100 to supplement power during the start-up process before the fuel cell 2 supplies electric power; the battery 25 is also used for heating up the reaction chamber 10 to initiate chemical reaction in the reactor vessel 102;
iii. the electric output port 165; this allows recharging of any battery cells and/or powering of portable electric apparatus carried by the user or soldier or sending the power directly to the electrical load 26;
iv. the manifold 109; is to provide flow pathway before hydrogen gas enters the fuel cell 2. The manifold 109 includes at least:
   a. multiple solenoid valves 126, 128, 136;
   b. the purifying filter 130; the hydrogen purifying filter maintains purity of the hydrogen content; and
   c. multiple pressure sensors 21, 132;
v. the pressure regulator 4;
vi. the controller 110; and
vii. a USB port 170 for debugging and maintenance (including electronic data extraction). An LCD display may be connected through a serial port (not shown in the figures) at the controller 110 to indicate to the user the amount of energy capacity left in the hydride cartridge 105.

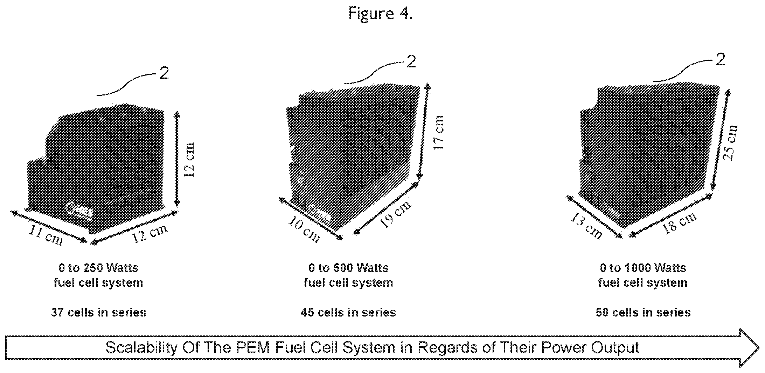

Figure 4 shows the images of the HES Energy Systems designed and assembled high energy density fuel cell apparatus and system 2 and how the power output for such apparatus and systems can be scaled up either by increasing the number of cells in the fuel cell stack or increasing the geometrical area of the membrane electrode assembly or vice a versa. If desired, further scaling up in the power output can be achieved by electrically connecting multiples of the same power outputting fuel cell apparatus and systems either in a series (to obtain a higher voltage) or parallel (to obtain a higher amperage) configurations.

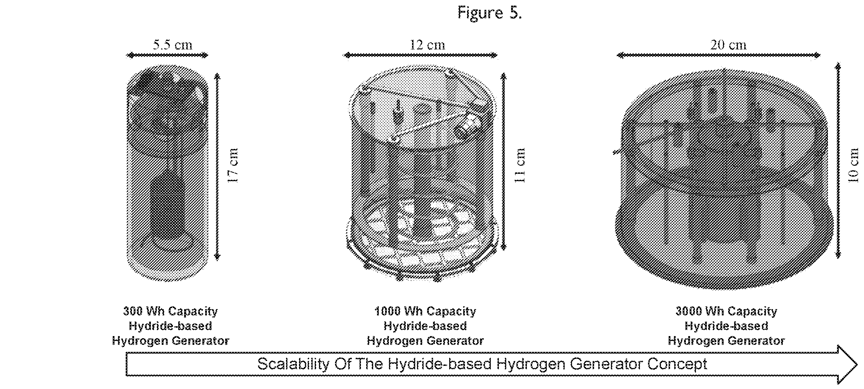

Figures 5 through 7 shows the same embodiment for the hydride cartridges 105 of with different energy storage capacity features. In terms of form factor and ease of manufacturing, cylindrical design was found to be the most promising approach. Small reactor vessels for portable applications (such as powering the electronics and gears of a single camper or a single soldier) would usually require a single microporous medium 168 (such as microporous tube) for dispersing the generated steam into the bulk of the hydride powder. Collection of hydrogen can be achieved via the small porous discs 170 located near the vessel cap 103 of the reactor vessel 102. For large volumes of hydrogen generation needs, reactor vessel 102 that is located inside the hydride-based hydrogen generator 3 can contain multiples of the porous tubes both for dispersing the steam into the bulk of the MgH2 powder and collect the generated hydrogen gas and then transfer it to the outlet section of the reactor vessel 102. In order to increase energy storage capacity of the reactor, physical dimensions of the reactor vessel 102 be enlarged both in diameter and length. The design iterations provided for this application are for showing the scalability of the hydride-based hydrogen generator 3 for larger volumes of hydrogen generation and the scope of this application is by no means limited only to these designs.

The reactor vessel 102 contains a dry magnesium hydride powder 30 disposed inside the vacuum-insulated double-walled reactor vessel 102 that offers excellent heat insulation. Vacuum insulated vessels are particularly well-suited for portable power applications. This allows the contents in the reactor vessel 102 to retain their heat for an extended period of time, while an exterior of the reactor vessel remains cool and safe to touch. Other non-portable power applications may not require the use of vacuum-insulated double-walled reactor vessel. The reaction between water and magnesium hydride produces hydrogen gas which is then supplied to the fuel cell 2 to generate useful (electric) energy to the user otr the intended application's load. The reactor vessel 102 contains the following components:
i. the heater 36; powered by the battery 25 (or another external power source) to supply sufficient heat to initiate hydrolysis reaction of the hydride powder 30 and this pre-heating is useful for the following two reasons: (i) pre-heat the liquid water and convert it into the high temperature steam in order to favor the exothermic MgH2 hydrolysis reaction and (ii) pre-heat the bulk of the MgH2 and hence prevent the condensation of the vaporized water;
ii. the water delivery tube 169; delivers controlled amounts of water from the water storage vessel 16 through the water pump 15 to the heater 36 that is submerged inside the MgH2 powder 30;
iii. the H₂ gas outlet port; H₂ gas produced during the exothermic MgH2 hydrolysis of the hydride powder 30 is directed out of the reaction chamber 10 to the fuel cell 2; and
iv. the temperature sensor 37; to monitor the reaction temperature of the exothermic MgH2 hydrolysis reaction occurring within the reaction chamber 10.
v. Microporous medium 168 (microporous tube); to disperse the generated steam into the bulk of the hydride powder disposed inside the hydrogen reactor vessel 102;
vi. Porous medium (discs, tubes, etc.) 170; to collect the generated hydrogen gas from the internal of the reaction chamber 10 to the quick-disconnect coupling 13 and then transfer it to the hydrogen line 20 for its cooling inside the cooling coil 120 that is submerged in the buffer tank 122;

Now, operation of the hydride cartridge 105 that is located inside the hydride-based hydrogen generator system 3 is described: Upon switching on, water from the water storage vessel 16 is supplied in controlled amounts into the hydride cartridge 105 through the water pump 15. The heater 36 is powered up by the battery 25 (or another power source) to heat up the reaction chamber 10 and heat up the liquid water and convert this into a high temperature steam to promote the exothermic MgH2 hydrolysis reaction between the hydride powder 30 and the steam to produce H₂ gas. When the reaction becomes optimized or stabilized, the exothermic nature of the hydrolysis reaction allows for self-sustainment of the hydrolysis reaction and no longer requires the aid of the heater 36. The H₂ produced during the reaction is cooled from a high temperature range of 100 to 600 °C, preferably of 200 to 400 °C, more preferably of 300 to 400 °C (in the reaction chamber 10) to about 5-100 °C, preferably to 10 to 50 °C, more preferably to 20 to 40 °C before hydrogen flows through the manifold 109 towards to the fuel cell stack 2. At the fuel cell 2, H2 and O2 reactants are reacted with each other electrochemically and as a result, electrical energy is produced with high efficiency, which is then channeled to the electrical load 26.

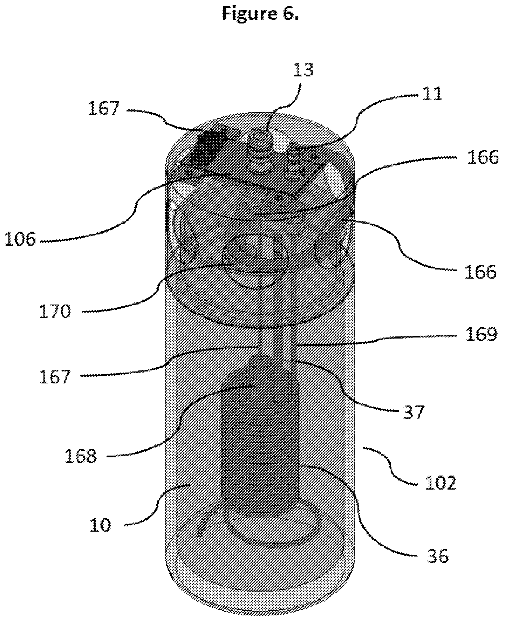

Referring to the cylindrical embodiment design provided in Figures 5 through 7, detailed design schematic of a 0 to 300 Wh capacity reactor vessel 102 that forms the heart of hydride cartridge is given in Figure 6. Liquid water located in water storage tank 16 is first transferred to the tubing 144 via water pump 15 in the desired quantities. Then, liquid water pushes through the inlet port of check valve 146 and reaches the outlet port of the check valve 146 and gets transferred through quick connector coupling 11 before it enters to the reactor vessel 102. Inlet of the heater 169 is directly connected to quick-disconnect coupling 11. While liquid water is travelling across the heater 36, battery 25 (or another power source) heats the liquid water above the steam formation temperature and generates steam. At the end of the heater 36, the coiled tubing is connected to a microporous medium 168 (such as microporous tube) that dispenses the steam into the bulk of the hydride powder 30 in order to initiate the exothermic MgH2 hydrolysis reaction. Steam that is dispersed into the microporous medium 168 (such as microporous tube) first exists the microporous tube and then travels into the bulk of the hydride powder and initiates the exothermic MgH2 hydrolysis reaction. As the output of the exothermic MgH2 hydrolysis reaction, hydrogen gas is generated from the MgH2 hydride powder 30. Another microporous medium 170 (porous disc, porous tube, etc.) that is located either within the bulk of the MgH2 powder 30 or close the vessel cap 103 provides a pathway for the generated hydrogen gas to leave the reaction chamber 10 through the hydrogen collection tubing 166. Collected hydrogen gas then moves into the hydrogen line 20 in order to be cooled down inside cooling coil 120 that is located inside the water storage tank 16. The electrical resistivity feature of the water delivery tubing 169 and microporous medium 168 (such as microporous tube) for steam injection has been utilized in order to resistively heat the water delivery tubing 169 and microporous medium 168 (such as microporous tube) with the aid of a battery 25 (or an external power source). A portion of the reactor vessel 102 can be designed to become the hot pole (terminal) and the main body of the reactor vessel to become the neutral pole (or terminal) by electrically isolating these two sections from each other. In another embodiment, a portion of the reactor vessel 102 can be designed to become the neutral pole (or terminal) and the main body of the reactor vessel to become the hot pole (terminal) by electrically isolating these two sections from each other.

The start-up sequence for the hydrogen generation system can take almost up to 10 minutes. During substantially the first 10 minutes of the operation, the energy output from the high energy density fuel cell apparatus and system with a hydride-based hydrogen generator 100 is predominantly contributed by the battery 25 (or another secondary power source) while hydrogen builds up within the reaction chamber 10. When significant amount of H₂ (flow) is generated from the exothermic MgH2 hydrolysis reaction to produce electric energy, fuel cell 2 takes over to supply electric power to the electric output port 165. The battery 25 together with any other rechargeable battery or electric load connected to the output port 165 would in-turn be recharged or powered by the electric energy produced at the fuel cell stack 2.

The controller 110 includes an algorithm that responds adaptively to the utilization level remaining in the hydride cartridge 105. For eg., if the hydride cartridge 105 is about half utilized, there is likelihood of water being present in the reaction chamber 10; in this case, more heat is required and the controller 110 algorithm responds adaptively to extend the heater's heating duration before more water is supplied into the reaction chamber 10.

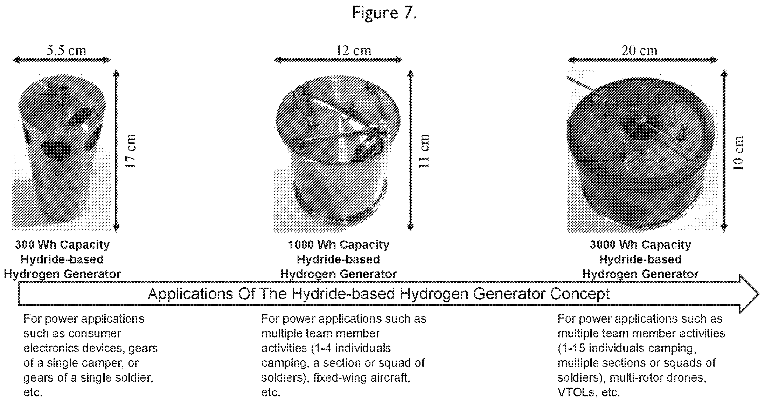

Figure 7 shows the images of the actual hydride-based hydrogen generator vessels that utilize magnesium hydride powder with different energy storage capacity and also some of the most relevant applications.

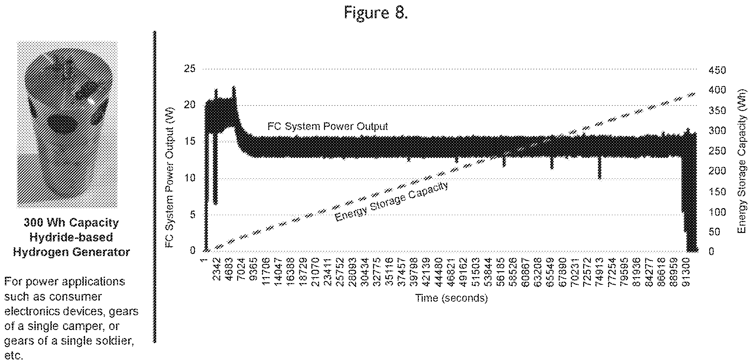

Figure 8 shows the images of the assembled hydride-based hydrogen generator (with an energy storage capability of 300 Wh) and the electrochemical performance of a high energy density fuel cell apparatus and system (picture not shown here) that is integrated with the stated hydride-based hydrogen generator. The high energy density fuel cell apparatus and system is capable of producing a power output of 0-35 Watts and the hydride-based hydrogen generator is capable of generating hydrogen gas flow rates that are needed for the stated high energy density fuel cell system by using the magnesium hydride as fuel surce. During the initial period of the electrochemical characterization, the high energy density fuel cell apparatus and system was operated around 20 Watts, and then a constant load of 15 Watts used for the remainder of the test. This performance indicates that the disclosed hardware can produce a stable power output and also the desired hydrogen flow rate that can be used for a number of portable power applications (such as a single camper, a soldier, consumer electronics devices, etc.).

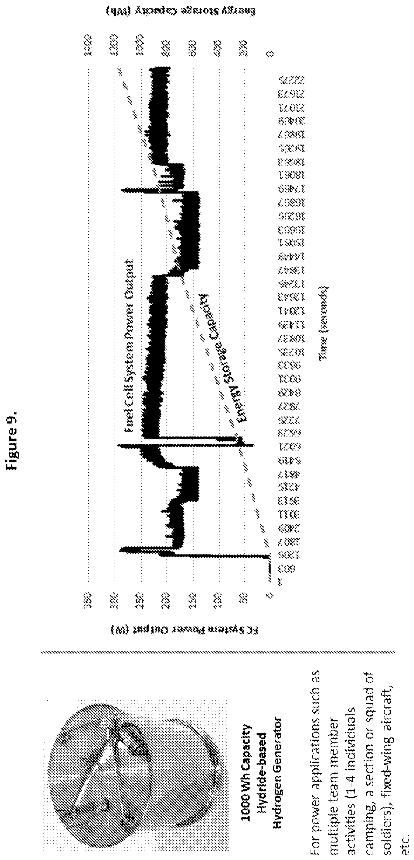

Figure 9 shows the images of the assembled hydride-based hydrogen generator (with an energy storage capability of 1000 Wh) and the electrochemical performance of a high energy density fuel cell apparatus and system (picture is not shown) that is integrated with the stated hydride-based hydrogen generator. The high energy density fuel cell apparatus and system is capable of producing a power output of 0-400 Watts and the hydride-based hydrogen generator is capable of generating hydrogen gas flow rates that are needed for the stated high energy density fuel cell apparatus and system. During the initial period of the electrochemical characterization, the high energy density fuel cell apparatus and system was operated around 200 to 300 Watts, and then a variable load used during the rest of the test. This performance indicates the disclosed hardware can produce a stable power output and also the desired hydrogen flow rate that can be used for a number of applications such as multiple team member involving activities for camping, a section or a squad of soldiers, fixed-wing aircraft, etc.

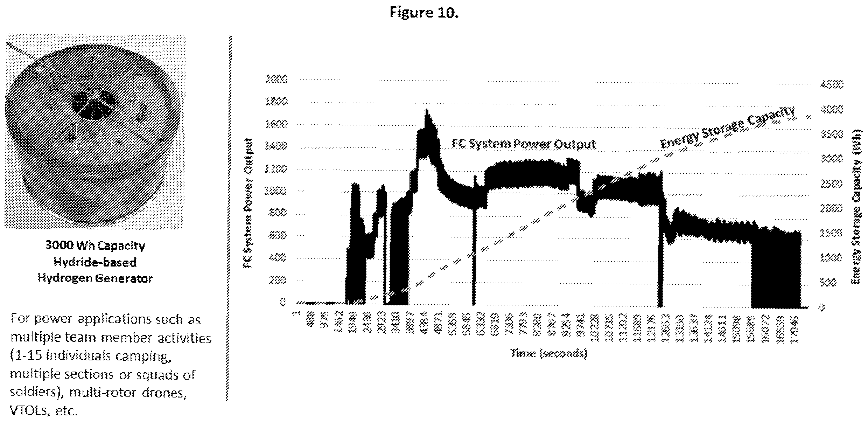

Figure 10 shows the images of the assembled hydride-based hydrogen generator (with an energy storage capability of 3000 Wh) and the electrochemical performance of a high energy density fuel cell apparatus and system (picture is not shown) that is integrated with the stated hydride-based hydrogen generator. The high energy density fuel cell apparatus and system is capable of producing a power output of 0-1800 Watts and the hydride-based hydrogen generator is capable of generating hydrogen gas flow rates that are needed for the stated high energy density fuel cell system. During the initial period of the electrochemical characterization, the high energy density fuel cell apparatus and system was operated around 0 to 1000 Watts, and then to 1700-1800 and then at a variable load during the rest of the test. This performance indicates the disclosed hardware can produce a stable power output and also the desired hydrogen flow rate that can be used for a number of applications such as multiple team member involving activities for camping, multiples of sections or squads of soldiers, multi-rotor drones, VTOLs, etc.

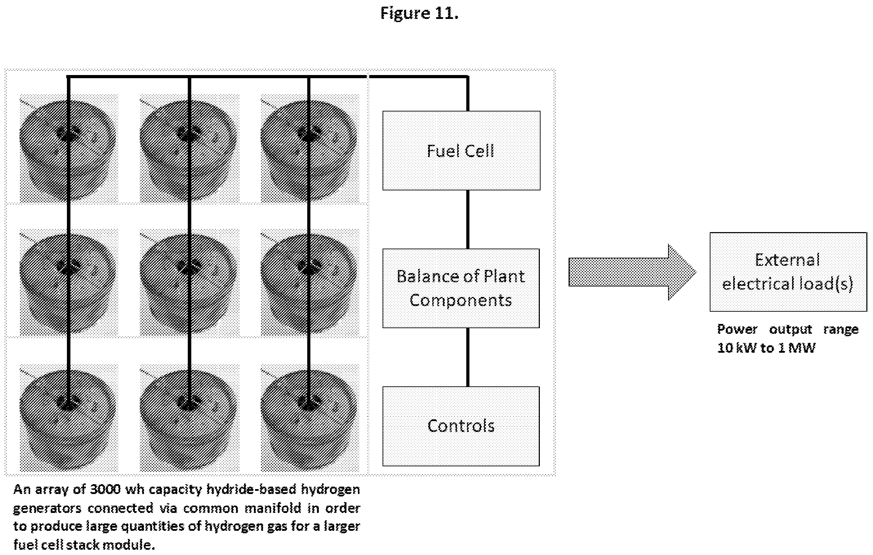

Figure 11 shows an alternative embodiment of how to scale up the hydrogen gas production for applications that are in the order of 10 kW to 1 MW. An array of the hydride-based hydrogen generator 3 can be integrated with each other through a common manifolding and the generated large quantities of hydrogen can then be consumed inside a much larger fuel cell 2 in order to produce the desired electrical power. Larger fuel cell system and hydrogen generator systems would require a different balance of plant components compared to the portable power applications and the scope of this application is not limited to the used components.

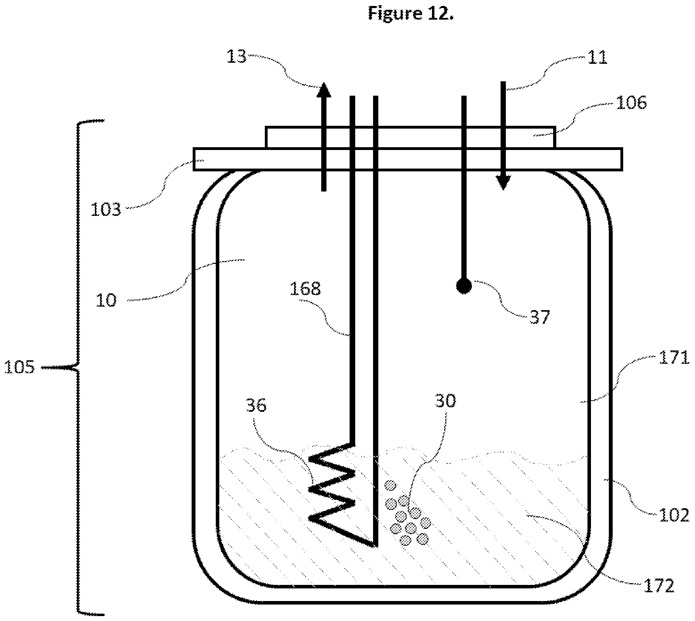

The process of single hydrolysis reaction zone 172 occurring within a reactor vessel 102 with a microporous medium 168 (such as microporous tube) that has single steam injection point is described in Figure 12. This setup utilizes a one continuous tube 36 (which is also known as heater) that is non-porous in nature, is directly connected to the microporous medium 168 (such as microporous tube) at a single location for steam to be injected into hollow internals of this microporous medium 168. The hydrolysis reaction is the most intense wherever the steam is injected directly. Despite the fact steam gets dispersed into the entire hollow volume, since most of the steam escapes the microporous tube 168 at the vicinity of the site it is injected, the hydrolysis reaction is most intense at the joint section where steam is injected from the heater 36 to the microporous tube 168. Since there is a single steam injection point for the microporous medium 168, there exists a single hydrolysis reaction zone. Having a single hydrolysis reaction zone naturally produces a limit on how long the microporous medium 168 for steam injection could be. It is speculated that the longer the microporous medium, the less efficient the hydrolysis reaction becomes.

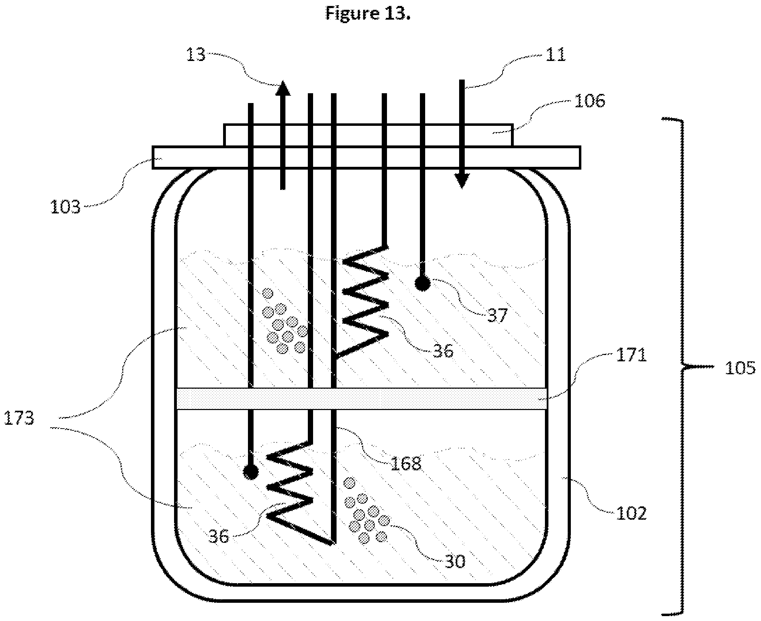

The process of multiple hydrolysis reaction zones 173 occurring within a reactor vessel 102 with a microporous medium 168 (such as microporous tube) that has multiple steam injection points is described in Figure 13. In this new improved design, the number of steam injection points are increased and spread across the entire length of the microporous medium 168 (such as a microporous tube) for injecting the steam at multiple locations and hence creating multiple hydrolysis reaction zones. Furthermore, bottom half of the hydrogen reactor vessel 102 is physically separated from the top half of the hydrogen reactor vessel 102 with a separator 171 in order to force the steam to travel within different parts of the bulk of the MgH2 powder. In this new embodiment, multiples of heater 36 unit are attached to separate sections of the microporous tube for steam injection 168 in order to increase the hydrolysis reaction zones. Increasing the steam injection points increases the number of hydrolysis reaction zones accordingly (for example if there are two steam injection points, then there are going to be two separate hydrolysis reaction zones) and hence an increase in the hydrogen generation rate or an increase in the hydrogen's flow rate.

In summary, the present application describes an improved power solution concept that is based on a high energy density fuel cell apparatus and system 100 and a hydride-based hydrogen generator 3 in order to produce the electrical energy needed for various applications without compromising the scalability. Conventional battery technologies have limited gravimetric energy storage values and hence limited operational time for any kind of desired application. The disclosed high energy density fuel cell apparatus and system and hydride-based hydrogen generator have a much higher gravimetric energy density value due to (i) use of a fuel cell that creates electrical energy from the electrochemical reactions of hydrogen and oxygen with high electrical efficiency and (ii) a high energy density hydride material as the source of hydrogen compared to conventional battery modules. These new advancements significantly extend the operational times of the intended applications compared to battery technologies. Furthermore, the disclosed application introduces multiple hydrolysis reaction zone concept for the exothermic MgH2 hydrolysis reaction pathway to further improve the hydrogen generation rate within the same vessel. Since high energy density fuel cell apparatus and system and the hydride-based hydrogen generator are highly scalable, the proposed concept can be used across multiple platforms without compromising the efficiency and scalability features. Finally, the fuel cell system provides several safety features to improve its safe operation.

Although the above description contains much specificity, this should not be construed as limiting the scope of the embodiments but merely providing illustration of the foreseeable embodiments. The above-stated advantages of the embodiments should not be construed especially as limiting the scope of the embodiments but merely to explain possible achievements if the described embodiments are put into practice. Thus, the scope of the embodiments should be determined by the claims.

### Reference Numbers

- 2: Fuel cell
- 3: Hydride-based hydrogen generator
- 4: Pressure regulator
- 5: Hydrogen outlet
- 6: Cable
- 10: Reaction chamber
- 11: Quick-disconnect coupling (for water supply)
- 13: Quick-disconnect coupling (for hydrogen outlet)
- 14: Water outlet port
- 15: Pump
- 16: Water storage vessel
- 20: Hydrogen line
- 21: Pressure sensor (located close to the reactor vessel 102)
- 22: Pressure relief valve
- 25: Battery
- 26: Electric load
- 30: Hydride powder
- 36: Heater
- 37: Temperature sensor or thermocouple
- 100: High energy density fuel cell apparatus and system with a hydride-based hydrogen generator
- 101: Housing
- 102: Reactor vessel
- 103: Vessel cap
- 104: Heat insulator
- 105: Hydride cartridge
- 106: Mounting plate
- 109: Manifold
- 110: Controller
- 120: Cooling coil
- 122: Buffer tank
- 123: Port
- 124: Outlet for hydrogen (located at the buffer tank)
- 126: Recollection valve
- 128: Supply valve
- 130: Purifying filter
- 132: Pressure sensor (located at the vicinity of the fuel cell 2)
- 134: Exhaust port
- 136: Purge valve
- 140: Porous PTFE membrane
- 142: Weighted clunk
- 144: Tubing
- 145: Discharge line
- 146: Check valve
- 162: Switch
- 163: Heater port
- 164: Signal
- 165: Output port or electric outlet port
- 166: Hydrogen collection tubing
- 167: Electrical connector for the reactor vessel
- 168: Microporous medium (for steam injection into the MgH2 powder)
- 169: Water delivery tubing
- 170: H2 collection porous discs
- 171: Separator plate
- 172: Single hydrolysis reaction zone
- 173: Multiple hydrolysis reaction zone
- S1: Solenoid (located on purge valve 126)
- S2: Solenoid (located on purge valve 128)
- S3: Solenoid (located on purge valve 136)

## Claims

1. A high energy density fuel cell apparatus and system with a hydride-based hydrogen generator (100) comprising the following:
a fuel cell (2) and its balance of plant components;
a water storage vessel (16) comprising liquid water and its balance of plant components
a reactor vessel (102) and its balance of plant components comprising a reaction chamber (10) adapted to contain magnesium hydride fuel and all of the essential other reactor components,
a heater (36) which is provided in the reaction chamber (10);
a tubing (144) adapted to supply the liquid water from the water storage vessel (16) to reactor vessel (102);
a water pump (15) disposed between the water storage vessel (16) and the reactor vessel (102);
a check valve (146) disposed in a discharge line connecting the water pump (15) to the reactor vessel (102);
where the fuel cell (2) is based on one of the following fuel cell technologies: proton exchange membrane fuel cell, alkaline fuel cell, solid oxide fuel cell, or phosphoric acid fuel cells,
where an array of fuel cells are arranged either in parallel or series in order to produce an appropriate power output level that is needed for the intended application,
where the reactor vessel (102) has a single stage hydrolysis reaction zone and has the capability of hydrolyzing magnesium hydride due to its high stability and high hydrogen storage capacity,
the single stage hydrolysis reaction zone has a steam dispensing microporous medium (168) and a single steam injection point being attached to the steam dispensing microporous medium (168),
wherein the liquid water located in water storage vessel (16) is first transferred to the tubing (144) via water pump (15) in desired quantities via a check valve (146) so as to enter the reactor vessel (102), and
wherein the heater 36 is directly connected to the microporous medium (168) at a single location for steam to be injected into hollow internals of this microporous medium (168),
where the hydrolysis reaction mechanism is based on the exothermic MgH2 hydrolysis reaction pathway in order to produce the maximum amount of exothermic heat for the self-sustainment of the hydrolysis reaction, wherein the hydrolysis of the MgH₂ is controlled by controlling the amount of water fed through the water pump (15) according to a demand of an electric load (26) connected to an electric output port (165),
where an array of the hydride-based hydrogen generators (single or multiples) are arranged either in parallel or series in order to generate an appropriate hydrogen flow rate for the intended application,
where the high energy density fuel cell apparatus and system, water storage vessel (16) and reactor vessel are in fluid communication, and
where the discharge line (145) comprises a tubing with a predetermined rupture pressure range.

2. A high energy density fuel cell apparatus and system with a hydride-based hydrogen generator (100) according to claim 1, further comprising a cooling coil disposed in the water storage vessel (16) to cool down hydrogen gas generated from exothermic MgH2 hydrolysis reaction of the MgH2 powder in the reactor vessel.

3. A high energy density fuel cell apparatus and system with a hydride-based hydrogen generator (100) according to claim 2, further comprising a buffer tank and a recollection valve, wherein the buffer tank is in fluid communication with the cooling coil and the recollection valve is operable to recycle the water condensed in the buffer tank (caused by cooling of the hydrogen gas) into the water storage vessel (16).

4. A high energy density fuel cell apparatus and system with a hydride-based hydrogen generator (100) according to claim 3, further comprising a purifying filter disposed in fluid communication with the buffer tank (122).

5. A high energy density fuel cell apparatus with a hydride-based hydrogen generator (100) according to claim 4, further comprising a supply valve (128) disposed in fluid communication between the buffer tank (122) and the purifying filter (130), wherein the supply valve (128) is operable by a solenoid.

6. A high energy density fuel cell apparatus and system with a hydride-based hydrogen generator (100) according to claim 2, wherein fluid communication for the hydrogen gas is formed in a manifold.

7. A high energy density fuel cell apparatus and system with a hydride-based hydrogen generator (100) according to claim 6, wherein the manifold (109) further supports the check valve (146) defined in Claim 1.

8. A high energy density fuel cell apparatus and system with a hydride-based hydrogen generator (100) according to claim 1, wherein the reactor vessel (102) has a double-wall construction, which interior of the double-wall is evacuated to a vacuum.

9. A high energy density fuel cell apparatus and system with a hydride-based hydrogen generator (100) according to claim 8, further comprising a vessel cap (103) disposed for closing a mouth of the reactor vessel (102).

10. A high energy density fuel cell apparatus and system with a hydride-based hydrogen generator (100) according to claim 8, further comprising heat insulation (104) disposed on an exterior of the reactor vessel (102) and vessel cap (103).

11. A high energy density fuel cell apparatus and system with a hydride-based hydrogen generator (100) according to claim 1, further comprising a controller (110)adapted to receive signals from a temperature sensor (37) and a pressure sensor (21), and in response adapted to turn on a battery to supply electric power to a heater disposed in the reactor vessel (102) before voltage generated from the high energy density fuel cell apparatus and system with a hydride-based hydrogen generator exceeds voltage across the battery.

12. A high energy density fuel cell apparatus and system with a hydride-based hydrogen generator (100) according to claim 11, further comprising an electric outlet port (165), wherein the electric outlet port is adapted to be controlled by the controller (110) so that the reactor vessel (102) is hot-swappable when the high energy density fuel cell apparatus and system with a hydride-based hydrogen generator is operating and power supply at the electric outlet port is not interrupted.

13. A process for operating a high energy density fuel cell apparatus and system with a hydride-based hydrogen generator system and for producing electric power to drive an electric load carried on a user or any desired application, the process comprising:
generating hydrogen on demand by supplying an amount of water to hydrolyse magnesium hydride powder disposed in a reactor vessel via exothermic MgH2 hydrolysis reaction pathway;
cooling down the temperature of the hydrogen gas produced by passing the hydrogen gas through a cooling coil (120) disposed in a water storage vessel (16), condensing water vapour from the hydrogen gas, and purifying the hydrogen gas by passing the hydrogen gas through a purifying filter, before supplying the hydrogen gas to a high energy density fuel cell apparatus and system;
rupturing the water discharge line at a predetermined pressure range, with the water discharge line connected to the reactor vessel (102);
closing the water discharge line with a check valve, so as to maintain leak-proof inside the reaction vessel, and shutting down the reactor vessel in a non-recoverable fail-safe mode when the high energy density fuel cell apparatus and system encounters a safety issue, and
having a single hydrolysis reaction zone by attaching a single steam injection point directly on the steam dispensing microporous medium,
where an array of high energy density fuel cell apparatus and system are arranged either in parallel or series in order to produce an appropriate power output level that is needed for the intended application,
where an array of the hydride-based hydrogen generators are arranged either in parallel or series in order to generate an appropriate hydrogen flow rate for the intended application.

14. A process for operating a high energy density fuel cell apparatus and system with a hydride-based hydrogen generator system and for producing electric power to drive an electric load carried on a user or any desired application according to claim 13, the process comprising:
generating hydrogen on demand by supplying an amount of water to hydrolyse magnesium hydride powder disposed in a reactor vessel via exothermic MgH2 hydrolysis reaction pathway;
cooling down a temperature of the hydrogen gas produced by passing the hydrogen gas through a cooling coil disposed in a water storage vessel (16), condensing water vapour from the hydrogen gas, and purifying the hydrogen gas by passing the hydrogen gas through a purifying filter, before supplying the hydrogen gas to a high energy density fuel cell apparatus and system;
rupturing the water discharge line at a predetermined pressure range, with the water discharge line connected to the reactor vessel (102);
closing the water discharge line with a check valve, so as to maintain leak-proof inside the reaction vessel, and shutting down the reactor vessel (102) in a non-recoverable fail-safe mode when the high energy density fuel cell apparatus and system encounters a safety issue, and
having multiple hydrolysis reaction zones by attaching multiple steam injection points directly on the steam dispensing microporous medium and physically separating each individual hydrolysis reaction zones with a physical separator in order to further improve the hydrogen gas generation rate,
where an array of high energy density fuel cell apparatus and system are arranged either in parallel or series in order to produce an appropriate power output level that is needed for the intended application,
where an array of the hydride-based hydrogen generators are arranged either in parallel or series in order to generate an appropriate hydrogen flow rate for the intended application.

## Patentansprüche

1. Brennstoffzellenvorrichtung und -system mit hoher Energiedichte mit einem Wasserstoffgenerator (100) auf Hydridbasis, aufweisend Folgendes:
eine Brennstoffzelle (2) und ihre Nebenanlagenkomponenten;
einen Wasserspeicherbehälter (16), aufweisend flüssiges Wasser und seine Nebenanlagenkomponenten
einen Reaktorbehälter (102) und seine Nebenanlagenkomponenten, aufweisend eine Reaktionskammer (10), die ausgebildet ist, Magnesiumhydrid-Brennstoff und alle wesentlichen anderen Reaktorkomponenten zu enthalten,
eine Heizung (36), die in der Reaktionskammer (10) bereitgestellt ist;
eine Rohrleitung (144), die ausgebildet ist, das flüssige Wasser von dem Wasserspeicherbehälter (16) an den Reaktorbehälter (102) bereitzustellen;
eine Wasserpumpe (15), die zwischen dem Wasserspeicherbehälter (16) und dem Reaktorbehälter (102) angeordnet ist;
ein Rückschlagventil (146), das in einer die Wasserpumpe (15) mit dem Reaktorbehälter (102) verbindenden Abflussleitung angeordnet ist;
wobei die Brennstoffzelle (2) auf einer der folgenden Brennstoffzellentechnologien basiert: Protonenaustauschmembran-Brennstoffzelle, alkalische Brennstoffzelle, Festoxid-Brennstoffzelle oder phosphorsaure Brennstoffzellen,
wobei eine Reihe von Brennstoffzellen entweder parallel oder in Reihe geschaltet ist, um eine für die vorgesehene Anwendung geeignete, benötigte Ausgangsleistung zu erzeugen,
wobei der Reaktorbehälter (102) eine einstufige Hydrolysereaktionszone besitzt und aufgrund seiner hohen Stabilität und hohen Wasserstoffspeicherfähigkeit Magnesiumhydrid hydrolysieren kann,
die einstufige Hydrolysereaktionszone ein dampfabgebendes mikroporöses Medium (168) und einen einzigen Dampfeinspritzpunkt, der mit dem dampfabgebenden mikroporösen Medium (168) verbunden ist, besitzt,
wobei das in dem Wasserspeicherbehälter (16) befindliche flüssige Wasser zunächst über die Wasserpumpe (15) in gewünschten Mengen über ein Rückschlagventil (146) in die Rohrleitung (144) geleitet wird, um in den Reaktorbehälter (102) einzutreten, und
wobei die Heizung 36 direkt mit dem mikroporösen Medium (168) an einer einzigen Stelle verbunden ist, um Dampf in hohle Innenräume dieses mikroporösen Mediums (168) zu injizieren,
wobei der Hydrolysereaktionsmechanismus auf dem exothermen MgH2-Hydrolysereaktionsweg basiert, um die maximale Menge an exothermer Wärme für die Selbsterhaltung der Hydrolysereaktion zu erzeugen, wobei die Hydrolyse des MgH₂ gesteuert wird, indem die durch die Wasserpumpe (15) zugeführte Wassermenge gemäß einem Bedarf einer elektrischen Last (26), die mit einem elektrischen Ausgangsanschluss (165) verbunden ist, gesteuert wird,
wobei eine Reihe der Wasserstoffgeneratoren auf Hydridbasis (einzeln oder mehrfach) entweder parallel oder in Reihe angeordnet sind, um einen für die vorgesehene Anwendung geeigneten Wasserstoffdurchsatz zu erzeugen,
wobei die Brennstoffzellenvorrichtung und das Brennstoffzellensystem mit hoher Energiedichte, der Wasserspeicherbehälter (16) und der Reaktorbehälter in Fluidverbindung stehen, und
wobei die Abflussleitung (145) einen Schlauch mit einem vorbestimmten Berstdruckbereich aufweist.

2. Brennstoffzellenvorrichtung und -system mit hoher Energiedichte mit einem Wasserstoffgenerator (100) auf Hydridbasis nach Anspruch 1, zudem aufweisend eine Kühlschlange, die in dem Wasserspeicherbehälter (16) angeordnet ist, um Wasserstoffgas abzukühlen, das aus der exothermen MgH2-Hydrolysereaktion des MgH2-Pulvers in dem Reaktorbehälter erzeugt wird.

3. Brennstoffzellenvorrichtung und -system mit hoher Energiedichte mit einem Wasserstoffgenerator (100) auf Hydridbasis nach Anspruch 2, zudem aufweisend einen Puffertank und ein Rückgewinnungsventil, wobei der Puffertank in Fluidverbindung mit der Kühlschlange steht und das Rückgewinnungsventil betreibbar ist, um das in dem Puffertank kondensierte Wasser (verursacht durch die Kühlung des Wasserstoffgases) in den Wasserspeicherbehälter (16) zurückzuführen.

4. Brennstoffzellenvorrichtung und -system mit hoher Energiedichte mit einem Wasserstoffgenerator (100) auf Hydridbasis nach Anspruch 3, zudem aufweisend einen Reinigungsfilter, der in Fluidverbindung mit dem Puffertank (122) angeordnet ist.

5. Brennstoffzellenvorrichtung mit hoher Energiedichte mit einem Wasserstoffgenerator (100) auf Hydridbasis nach Anspruch 4, zudem aufweisend ein Versorgungsventil (128), das in Fluidverbindung zwischen dem Puffertank (122) und dem Reinigungsfilter (130) angeordnet ist, wobei das Versorgungsventil (128) durch ein Solenoid betätigbar ist.

6. Brennstoffzellenvorrichtung und -system mit hoher Energiedichte mit einem Wasserstoffgenerator (100) auf Hydridbasis nach Anspruch 2, wobei die Fluidverbindung für das Wasserstoffgas in einem Verteiler ausgebildet ist.

7. Brennstoffzellenvorrichtung und -system mit hoher Energiedichte mit einem Wasserstoffgenerator (100) auf Hydridbasis nach Anspruch 6, wobei der Verteiler (109) zudem das in Anspruch 1 definierte Rückschlagventil (146) trägt.

8. Brennstoffzellenvorrichtung und -system mit hoher Energiedichte mit einem Wasserstoffgenerator (100) auf Hydridbasis nach Anspruch 1, wobei der Reaktorbehälter (102) eine doppelwandige Konstruktion besitzt, deren Inneres zu einem Vakuum evakuiert ist.

9. Brennstoffzellenvorrichtung und -system mit hoher Energiedichte mit einem Wasserstoffgenerator (100) auf Hydridbasis nach Anspruch 8, zudem aufweisend einen Behälterdeckel (103), der zum Verschließen einer Öffnung des Reaktorbehälters (102) angeordnet ist.

10. Brennstoffzellenvorrichtung und -system mit hoher Energiedichte mit einem Wasserstoffgenerator (100) auf Hydridbasis nach Anspruch 8, zudem aufweisend eine Wärmeisolierung (104), die an einer Außenseite des Reaktorbehälters (102) und des Behälterdeckels (103) angeordnet ist.

11. Brennstoffzellenvorrichtung und -system mit hoher Energiedichte mit einem Wasserstoffgenerator (100) auf Hydridbasis nach Anspruch 1, zudem aufweisend eine Steuerung (110), die ausgebildet ist, Signale von einem Temperatursensor (37) und einem Drucksensor (21) zu empfangen und in Reaktion darauf eine Batterie einzuschalten, um eine in dem Reaktorbehälter (102) angeordnete Heizung mit elektrischer Energie zu versorgen, bevor von der Brennstoffzellenvorrichtung und dem Brennstoffzellensystem mit hoher Energiedichte mit einem Wasserstoffgenerator auf Hydridbasis erzeugte Spannung die Spannung an der Batterie übersteigt.

12. Brennstoffzellenvorrichtung und -system mit hoher Energiedichte mit einem Wasserstoffgenerator (100) auf Hydridbasis nach Anspruch 11, zudem aufweisend einen elektrischen Ausgangsanschluss (165), wobei der elektrische Ausgangsanschluss ausgebildet ist, von der Steuerung (110) gesteuert zu werden, so dass der Reaktorbehälter (102) im heißen Zustand ausgetauscht werden kann, wenn die Brennstoffzellenvorrichtung und das Brennstoffzellensystem mit hoher Energiedichte mit einem Wasserstoffgenerator auf Hydridbasis in Betrieb ist und die Stromversorgung an dem elektrischen Ausgangsanschluss nicht unterbrochen ist.

13. Verfahren zum Betreiben einer Brennstoffzellenvorrichtung und eines Brennstoffzellensystems mit hoher Energiedichte mit einem Wasserstoffgeneratorsystem auf Hydridbasis und zum Erzeugen elektrischer Energie zum Betreiben einer elektrischen Last, die von einem Benutzer getragen wird, oder jeder gewünschten Anwendung, wobei das Verfahren umfasst:
Erzeugen von Wasserstoff nach Bedarf durch Zuführen einer Wassermenge zur Hydrolyse von Magnesiumhydridpulver, das sich in einem Reaktorbehälter befindet, über einen exothermen MgH2-Hydrolysereaktionsweg;
Abkühlen der Temperatur des erzeugten Wasserstoffgases, indem das Wasserstoffgas durch eine Kühlschlange (120) geleitet wird, die in einem Wasserspeicherbehälter (16) angeordnet ist, Kondensieren von Wasserdampf aus dem Wasserstoffgas und Reinigen des Wasserstoffgases, indem das Wasserstoffgas durch einen Reinigungsfilter geleitet wird, bevor das Wasserstoffgas einer Brennstoffzellenvorrichtung und einem Brennstoffzellensystem mit hoher Energiedichte zugeführt wird;
Zerreißen der Wasserabflussleitung in einem vorbestimmten Druckbereich, wobei die Wasserabflussleitung mit dem Reaktorbehälter (102) verbunden ist;
Schließen der Wasserabflussleitung mit einem Rückschlagventil, um die Dichtheit in dem Reaktorbehälter aufrechtzuerhalten, und Abschalten des Reaktorbehälters in einen nicht wiederherstellbaren ausfallsicheren Modus, wenn die Brennstoffzellenvorrichtung und das Brennstoffzellensystem mit hoher Energiedichte auf ein Sicherheitsproblem stoßen, und
Besitzen einer einzigen Hydrolysereaktionszone, indem ein einziger Dampfeinspritzpunkt direkt auf dem dampfabgebenden mikroporösen Medium angebracht wird,
wobei eine Reihe von Brennstoffzellenvorrichtungen und -systemen mit hoher Energiedichte entweder parallel oder in Reihe geschaltet sind, um eine für die vorgesehene Anwendung geeignete, benötigte Ausgangsleistung zu erzeugen,
wobei eine Reihe der Wasserstoffgeneratoren auf Hydridbasis entweder parallel oder in Reihe angeordnet sind, um einen für die vorgesehene Anwendung geeigneten Wasserstoffdurchsatz zu erzeugen.

14. Verfahren zum Betreiben einer Brennstoffzellenvorrichtung und eines Brennstoffzellensystems mit hoher Energiedichte mit einem Wasserstoffgeneratorsystem auf Hydridbasis und zum Erzeugen elektrischer Energie zum Betreiben einer elektrischen Last, die von einem Benutzer getragen wird, oder jeder gewünschten Anwendung nach Anspruch 13, wobei das Verfahren umfasst:
Erzeugen von Wasserstoff nach Bedarf durch Zuführen einer Wassermenge zur Hydrolyse von Magnesiumhydridpulver, das sich in einem Reaktorbehälter befindet, über einen exothermen MgH2-Hydrolysereaktionsweg;
Abkühlen einer Temperatur des erzeugten Wasserstoffgases, indem das Wasserstoffgas durch eine Kühlschlange geleitet wird, die in einem Wasserspeicherbehälter (16) angeordnet ist, Kondensieren von Wasserdampf aus dem Wasserstoffgas und Reinigen des Wasserstoffgases, indem das Wasserstoffgas durch einen Reinigungsfilter geleitet wird, bevor das Wasserstoffgas einer Brennstoffzellenvorrichtung und einem Brennstoffzellensystem mit hoher Energiedichte zugeführt wird;
Zerreißen der Wasserabflussleitung in einem vorbestimmten Druckbereich, wobei die Wasserabflussleitung mit dem Reaktorbehälter (102) verbunden ist;
Schließen der Wasserabflussleitung mit einem Rückschlagventil, um die Dichtheit in dem Reaktorbehälter aufrechtzuerhalten, und Abschalten des Reaktorbehälters (102) in einen nicht wiederherstellbaren ausfallsicheren Modus, wenn die Brennstoffzellenvorrichtung und das Brennstoffzellensystem mit hoher Energiedichte auf ein Sicherheitsproblem stoßen, und
Besitzen mehrerer Hydrolysereaktionszonen, indem mehrere Dampfeinspritzpunkte direkt auf dem dampfabgebenden mikroporösen Medium angebracht werden und jede einzelne Hydrolysereaktionszone mit einem physikalischen Separator physisch getrennt wird, um die Wasserstoffgaserzeugungsrate weiter zu verbessern,
wobei eine Reihe von Brennstoffzellenvorrichtungen und -systemen mit hoher Energiedichte entweder parallel oder in Reihe geschaltet sind, um eine für die vorgesehene Anwendung geeignete, benötigte Ausgangsleistung zu erzeugen,
wobei eine Reihe der Wasserstoffgeneratoren auf Hydridbasis entweder parallel oder in Reihe angeordnet sind, um einen für die vorgesehene Anwendung geeigneten Wasserstoffdurchsatz zu erzeugen.

## Revendications

1. Appareil et système de pile à combustible à haute densité énergétique avec un générateur d'hydrogène à base d'hydrure (100) comprenant ce qui suit :
une pile à combustible (2) et ses composants de dépendances ;
un réservoir de stockage d'eau (16) comprenant de l'eau liquide et ses composants de dépendances
un réservoir de réacteur (102) et ses composants de dépendances comprenant une chambre de réaction (10) adaptée pour contenir de combustible d'hydrure de magnésium et tous les autres composants essentiels du réacteur,
un dispositif de chauffage (36) placé dans la chambre de réaction (10) ;
un tuyau (144) adapté pour acheminer l'eau liquide depuis le réservoir de stockage d'eau (16) jusqu'au réservoir de réacteur (102) ;
une pompe à eau (15) disposée entre le réservoir de stockage d'eau (16) et le réservoir de réacteur (102) ;
un clapet anti-retour (146) disposé dans une conduite d'écoulement reliant la pompe à eau (15) au réservoir de réacteur (102) ;
dans lequel la pile à combustible (2) est basée sur l'une des technologies de pile à combustible suivantes : pile à combustible à membrane échangeuse de protons, pile à combustible alcaline, pile à combustible à oxyde solide ou piles à combustible à acide phosphorique,
dans lequel un ensemble de piles à combustible sont disposées en parallèle ou en série afin de produire un niveau de puissance nécessaire approprié à l'application envisagée,
dans lequel le réservoir de réacteur (102) comporte une zone de réaction d'hydrolyse à un étage et permet d'hydrolyser l'hydrure de magnésium en raison de sa grande stabilité et de sa capacité élevée de stockage de l'hydrogène,
la zone de réaction d'hydrolyse à un étage comportant un milieu microporeux de distribution de vapeur (168) et un seul point d'injection de vapeur fixé au milieu microporeux de distribution de vapeur (168),
dans lequel l'eau liquide située dans le réservoir de stockage d'eau (16) est d'abord transférée au tuyau (144) par la pompe à eau (15) en quantités souhaitées via un clapet anti-retour (146) afin d'entrer dans le réservoir de réacteur (102), et
dans lequel le dispositif de chauffage 36 est directement relié au milieu microporeux (168) en un seul endroit pour que de la vapeur soit injectée dans des internes creux de ce milieu microporeux (168),
dans lequel le mécanisme de réaction d'hydrolyse est basé sur la voie de réaction exothermique d'hydrolyse du MgH2 afin de produire la quantité maximale de chaleur exothermique pour l'auto-entretien de la réaction d'hydrolyse, dans lequel l'hydrolyse du MgH₂ est contrôlée en contrôlant la quantité d'eau alimentée par la pompe à eau (15) en fonction d'une demande d'une charge électrique (26) connectée à un port de sortie électrique (165),
dans lequel un ensemble de générateurs d'hydrogène à base d'hydrure (un ou plusieurs) sont disposés en parallèle ou en série afin de générer un débit d'hydrogène approprié à l'application envisagée,
dans lequel l'appareil et le système de pile à combustible à haute densité énergétique, le réservoir de stockage d'eau (16) et le réservoir de réacteur sont en communication fluidique, et
dans lequel la conduite d'écoulement (145) comprend un tuyau avec une plage de pression de rupture prédéterminée.

2. Appareil et système de pile à combustible à haute densité énergétique avec un générateur d'hydrogène à base d'hydrure (100) selon la revendication 1, comprenant en outre un serpentin de refroidissement disposé dans le réservoir de stockage d'eau (16) pour refroidir de l'hydrogène gazeux généré par la réaction exothermique d'hydrolyse du MgH2 de la poudre de MgH2 dans le réservoir de réacteur.

3. Appareil et système de pile à combustible à haute densité énergétique avec un générateur d'hydrogène à base d'hydrure (100) selon la revendication 2, comprenant en outre un réservoir tampon et un clapet de récupération, dans lequel le réservoir tampon est en communication fluidique avec le serpentin de refroidissement et le clapet de récupération est opérationnel pour recycler l'eau condensée dans le réservoir tampon (causée par le refroidissement de l'hydrogène gazeux) dans le réservoir de stockage d'eau (16).

4. Appareil et système de pile à combustible à haute densité énergétique avec un générateur d'hydrogène à base d'hydrure (100) selon la revendication 3, comprenant en outre un filtre purificateur disposé en communication fluidique avec le réservoir tampon (122).

5. Appareil de pile à combustible à haute densité énergétique avec un générateur d'hydrogène à base d'hydrure (100) selon la revendication 4, comprenant en outre un clapet d'alimentation (128) disposé en communication fluidique entre le réservoir tampon (122) et le filtre purificateur (130), le clapet d'alimentation (128) pouvant être actionné par un solénoïde.

6. Appareil et système de pile à combustible à haute densité énergétique avec un générateur d'hydrogène à base d'hydrure (100) selon la revendication 2, dans lequel la communication fluidique pour l'hydrogène gazeux est formée dans un collecteur.

7. Appareil et système de pile à combustible à haute densité énergétique avec un générateur d'hydrogène à base d'hydrure (100) selon la revendication 6, dans lequel le collecteur (109) supporte en outre le clapet anti-retour (146) défini dans la revendication 1.

8. Appareil et système de pile à combustible à haute densité énergétique avec un générateur d'hydrogène à base d'hydrure (100) selon la revendication 1, dans lequel le réservoir de réacteur (102) est à double paroi, l'intérieur de la double paroi étant mis sous vide.

9. Appareil et système de pile à combustible à haute densité énergétique avec un générateur d'hydrogène à base d'hydrure (100) selon la revendication 8, comprenant en outre un bouchon de réservoir (103) disposé pour fermer une embouchure du réservoir de réacteur (102).

10. Appareil et système de pile à combustible à haute densité énergétique avec un générateur d'hydrogène à base d'hydrure (100) selon la revendication 8, comprenant en outre une isolation thermique (104) disposée à un extérieur du réservoir de réacteur (102) et du bouchon de réservoir (103).

11. Appareil et système de pile à combustible à haute densité énergétique avec un générateur d'hydrogène à base d'hydrure (100) selon la revendication 1, comprenant en outre un contrôleur (110) adapté pour recevoir des signaux d'un capteur de température (37) et d'un capteur de pression (21) et, en réponse, adapté pour activer une batterie afin de fournir de l'énergie électrique à un dispositif de chauffage disposé dans le réservoir de réacteur (102) avant qu'une tension générée par l'appareil et le système de pile à combustible à haute densité énergétique avec un générateur d'hydrogène à base d'hydrure ne dépasse une tension aux bornes de la batterie.

12. Appareil et système de pile à combustible à haute densité énergétique avec un générateur d'hydrogène à base d'hydrure (100) selon la revendication 11, comprenant en outre un port de sortie électrique (165), dans lequel le port de sortie électrique est adapté pour être commandé par le contrôleur (110) de sorte que le réservoir de réacteur (102) soit remplaçable à chaud lorsque l'appareil et le système de pile à combustible à haute densité énergétique avec un générateur d'hydrogène à base d'hydrure fonctionne et que l'alimentation électrique au niveau du port de sortie électrique n'est pas interrompue.

13. Procédé pour faire fonctionner un appareil et un système de pile à combustible à haute densité énergétique avec un système générateur d'hydrogène à base d'hydrure et pour produire de l'énergie électrique pour entraîner une charge électrique portée par un utilisateur ou toute autre application souhaitée, le procédé comprenant :
produire de l'hydrogène à la demande en fournissant une quantité d'eau pour hydrolyser une poudre d'hydrure de magnésium disposée dans un réservoir de réacteur par une voie de réaction exothermique d'hydrolyse du MgH2 ;
refroidir la température de l'hydrogène gazeux produit en faisant passer l'hydrogène gazeux dans un serpentin de refroidissement (120) disposé dans un réservoir de stockage d'eau (16), condenser une vapeur d'eau de l'hydrogène gazeux, et purifier l'hydrogène gazeux en faisant passer l'hydrogène gazeux dans un filtre purificateur, avant de fournir l'hydrogène gazeux à un appareil et à un système de pile à combustible à haute densité énergétique ;
casser la conduite d'écoulement d'eau dans une plage de pression prédéterminée, la conduite d'écoulement d'eau étant reliée au réservoir de réacteur (102) ;
fermer la conduite d'écoulement d'eau à l'aide d'un clapet anti-retour, de manière à maintenir l'étanchéité à l'intérieur du réservoir de réacteur, et arrêter le réservoir de réacteur en mode de sécurité intégrée non récupérable lorsque l'appareil et le système de pile à combustible à haute densité énergétique rencontrent un problème de sécurité, et
avoir une seule zone de réaction d'hydrolyse en fixant un seul point d'injection de vapeur directement sur le milieu microporeux de distribution de vapeur,
dans lequel un ensemble d'appareils et de systèmes de pile à combustible à haute densité énergétique sont disposés en parallèle ou en série afin de produire un niveau de puissance nécessaire approprié à l'application envisagée,
dans lequel un ensemble de générateurs d'hydrogène à base d'hydrure sont disposés en parallèle ou en série afin de générer un débit d'hydrogène approprié à l'application envisagée.

14. Procédé pour faire fonctionner un appareil et un système de pile à combustible à haute densité énergétique avec un système générateur d'hydrogène à base d'hydrure et pour produire de l'énergie électrique pour entraîner une charge électrique portée par un utilisateur ou toute application souhaitée selon la revendication 13, le procédé comprenant :
produire de l'hydrogène à la demande en fournissant une quantité d'eau pour hydrolyser une poudre d'hydrure de magnésium disposée dans un réservoir de réacteur par une voie de réaction exothermique d'hydrolyse du MgH2 ;
refroidir une température de l'hydrogène gazeux produit en faisant passer l'hydrogène gazeux dans un serpentin de refroidissement disposé dans un réservoir de stockage d'eau (16), condenser une vapeur d'eau de l'hydrogène gazeux, et purifier l'hydrogène gazeux en faisant passer l'hydrogène gazeux dans un filtre purificateur, avant de fournir l'hydrogène gazeux à un appareil et à un système de pile à combustible à haute densité énergétique ;
casser la conduite d'écoulement d'eau dans une plage de pression prédéterminée, la conduite d'écoulement d'eau étant reliée au réservoir de réacteur (102) ;
fermer la conduite d'écoulement d'eau à l'aide d'un clapet anti-retour, de manière à maintenir l'étanchéité à l'intérieur du réservoir de réacteur, et arrêter le réservoir de réacteur (102) en mode de sécurité intégrée non récupérable lorsque l'appareil et le système de pile à combustible à haute densité énergétique rencontrent un problème de sécurité, et
avoir plusieurs zones de réaction d'hydrolyse en fixant plusieurs points d'injection de vapeur directement sur le milieu microporeux de distribution de vapeur et en séparant physiquement chaque zone individuelle de réaction d'hydrolyse à l'aide d'un séparateur physique afin d'améliorer encore le taux de production d'hydrogène gazeux,
dans lequel un ensemble d'appareils et de systèmes de pile à combustible à haute densité énergétique sont disposés en parallèle ou en série afin de produire un niveau de puissance nécessaire approprié à l'application envisagée,
dans lequel un ensemble de générateurs d'hydrogène à base d'hydrure sont disposés en parallèle ou en série afin de générer un débit d'hydrogène approprié à l'application envisagée.
